Europäisches Patentamt

European Patent Office

Office européen des brevets

(19)

(11) Veröffentlichungsnummer: **0 141 113**
A1

(12) **EUROPÄISCHE PATENTANMELDUNG**

(21) Anmeldenummer: 84110044.9

(22) Anmeldetag: 23.08.84

(51) Int. Cl.⁴: **G 11 B 23/03**

(30) Priorität: 29.08.83 EP 83108481

(43) Veröffentlichungstag der Anmeldung:
15.05.85 Patentblatt 85/20

(84) Benannte Vertragsstaaten:
AT BE CH DE FR GB IT LI LU NL SE

(71) Anmelder: idn inventions and development of novelties ag
Hartbertstrasse 9
CH-7002 Chur(CH)

(72) Erfinder: Ackeret, Peter
Allmendstr. 18
CH-8700 Küsnacht(CH)

(74) Vertreter: Dipl.-Ing. H. Marsch Dipl.-Ing. K. Sparing
Dipl.-Phys.Dr. W.H. Röhl Patentanwälte
Rethelstrasse 123
D-4000 Düsseldorf(DE)

(54) Behälter für flache Aufzeichnungsträger.

(57) Die Erfindung betrifft einen Behälter für flache Aufzeichnungsträger, wie Schall- oder Bildplatten, mit einem Gehäuse, in dem Halter für je einen Aufzeichnungsträger zwischen einer Aufbewahrungsposition und einer äußeren Entnahmeposition beweglich sind, wobei jeder Halter einen Enschiebeschlitz aufweist, der in der Entnahmeposition trichterartig geöffnet, in der Aufbewahrungsposition jedoch geschlossen ist.

*Fig. 1*

Croydon Printing Company Ltd.

0141113

49/96-A1/E

Behälter für flache Aufzeichnungsträger.

----------------------------------------

Die Erfindung bezieht sich auf einen Behälter für flache Aufzeichnungsträger, wie Schall- oder Bildplatten, mit den im Oberbegriff des Anspruchs 1 genannten Merkmalen. Ein solcher Behälter, als Möbelstück konzipiert, ist aus der DE-C-1 131 026 bekannt. Die Bedienung ist ziemlich umständlich, was aber nicht weiter stört, weil der Benutzer ohnehin die üblichen Langspielplatten, für die der Behälter bestimmt ist, noch aus ihren Schutzhüllen herausnehmen muß.

Gegenwärtig gibt es scheibenförmige Aufzeichnungsträger für Audio- und Videosignale, die zwar gegen Staub empfindlich sind, nicht aber gegen Fingerabdrücke, so daß sie schadlos ohne Schutzhülle gehandhabt werden können. Wegen ihrer hohen Wiedergabequalität stehen insbesondere die sogenannten "Compactdiscs" für Audiosignale in Wettbewerb mit den bekannten Kassettenrecordern, wobei es auch bereits Compactdisc-Abspielgeräte für den Einbau in Kraftfahrzeuge gibt.

Besonders für den letztgenannten Anwendungsfall stellt sich das Problem, einen Aufbewahrungsbehälter für eine Mehrzahl von Aufzeichnungsträgern zu schaffen, der einerseits auf geringstem Raum die Unterbringung einer großen Zahl von Discs ermöglicht, andererseits einhändig bequem und ohne die Aufmerksamkeit des Benutzers zu beanspruchen bedienbar ist.

Der Patentanspruch 1 nennt die erfindungsgemäß für die Lösung dieser Aufgabe vorgesehenen Merkmale. - Jeder Halter ist in seiner Entnahmeposition gut zugänglich, und der Benutzer kann sogar ohne hinzusehen eine Disc entnehmen oder, was noch wichtiger ist, auch wieder einlegen. In der Aufbewahrungsposition hingegen liegen die Discs dicht gestapelt und beanspruchen nur sehr wenig Platz.

Die Unteransprüche definieren zweckmäßige Ausgestaltungen des Gegenstandes der Erfindung. Einige von ihnen sollen hier näher erläutert werden.

Damit der Aufzeichnungsbereich der Disc nicht gefährdet ist, sind die der Disc zugekehrten Wandungen der Halter konkav ausgebildet. Auf diese Weise kommt in der Aufbewahrungsposition und auch während des Einlegens oder Entnehmens nur die Außenkante der Disc in Berührung mit dem Halter.

Um die Handhabung insbesondere im Kraftfahrzeug zu erleichtern, ist es bevorzugt, wenn der Behälter eine Federanordnung umfaßt, die die Halter in die Entnahmeposition vorspannt, und eine Verriegelungsanordnung, die die Halter in der Aufbewahrungsposition gegen die Federvorspannung im Gehäuse hält. Die Verriegelung ist dann manuell lösbar. Dieses Merkmal ist an sich bei Aufbewahrungsbehältern für Kompaktkassetten bekannt, vgl. DE-C-22 48 408.

Ausführungsbeispiele des Gegenstandes der Erfindung werden nachstehend unter Bezugnahme auf die beigefügten Zeichnungen erläutert.

Fig. 1   zeigt perspektivisch eine erste Ausführungsform,

Fig. 2   ist eine Draufsicht auf eine Dischalteplatte, horizontal geschnitten,

Fig. 3   zeigt im Querschnitt das Profil zweier übereinander angeordneter Halteplatten,

Fig. 4   stellt eine Variante der ersten Ausführungsform dar,

Fig. 5   zeigt eine zweite Ausführungsform,

Fig. 6   ist eine Variante der zweiten Ausführungsform,

Fig. 7   zeigt im weitgehend schematisierten Vertikalschnitt eine dritte Ausführungsform,

Fig. 8   zeigt in Perspektive eine weitere Ausführungsform,

Fig. 9   stellt perspektivisch eine weitere Ausführungsform dar.

Die Ausführungsbeispiele beziehen sich sämtlich auf Behälter für sogenannte Compactdiscs, es versteht sich aber, daß sie für andere Aufzeichnungsträger, etwa Bildplatten, Floppies usw. ebenfalls brauchbar sein können, wobei die gegebenenfalls erforderlichen Änderungen für Fachleute auf der Hand liegen.

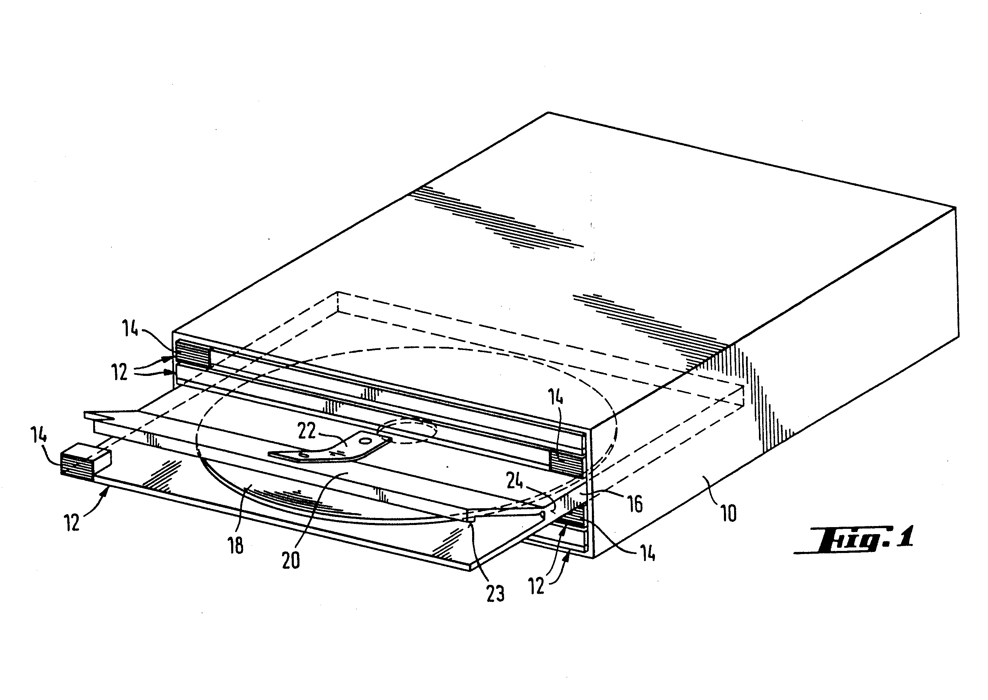

Der Disc-Behälter nach Fig. 1 umfaßt ein Gehäuse 10, in dem parallel übereinander mehrere — hier fünf — Halter 12 für je eine Disc gleitbeweglich aufgenommen sind. Jedem Halter ist im Innern des Behälters eine Federanordnung zugeordnet, die den Halter in eine Entnahmeposition vorspannt; in Fig. 1 ist der dritte Halter in dieser ausgefahrenen Entnahmeposition gezeichnet. Der Ausschubhub wird durch Anschläge festgelegt. In der Einschubposition sind die Halter im Gehäuse gegen die Vorspannung der Federanordnung verriegelt, und diese Verriegelung ist manuell auslösbar. In der Ausführungsform nach Fig. 1 ist ein Verriegelungssystem vorgesehen, bei dem der Halter sich beim Einschub aus der Entnahmeposition verriegelt und die Verriegelung durch erneuten Druck auf den eingeschobenen Halter wieder entriegelt; hierfür geeignete Konstruktionen sind in der EP-A-83108472.8 offenbart, auf die bezuggenommen wird.- Um das Entriegeln der ziemlich schmalen Halter für den Benutzer bequemer zu machen, ist an dem Halter rechts oder links, alternierend bei aufeinanderfolgenden Haltern, eine vorstehende Taste 14 angeformt.

Jeder Halter umfaßt eine Platte 16, auf der die Disc 18 ablegbar ist, und an ihn ist eine Klappe 20 angelenkt, welche von einer Blattfeder 22 von der Platte 16 abgespreizt gehalten wird, wenn der Halter in der Entnahmeposition ist. Beim Einschub des Halters läuft die Klappe auf die Frontkante des darüber befindlichen Halters oder -- im Falle des obersten Halters -- des Gehäuses 10 auf und wird dadurch nach unten gedrückt, womit der von der Platte 16 einerseits, der Klappe 20 andererseits begrenzte Schlitz geschlossen wird. Die freie Kante der Klappe 20 ist nach unten abgewinkelt, und die so gebildete Leiste 23 verschließt das Discaufnahmefach im eingeschobenen Zustand des Halters. Die Disc ist also dann von dem Halter taschenartig allseits umschlossen.

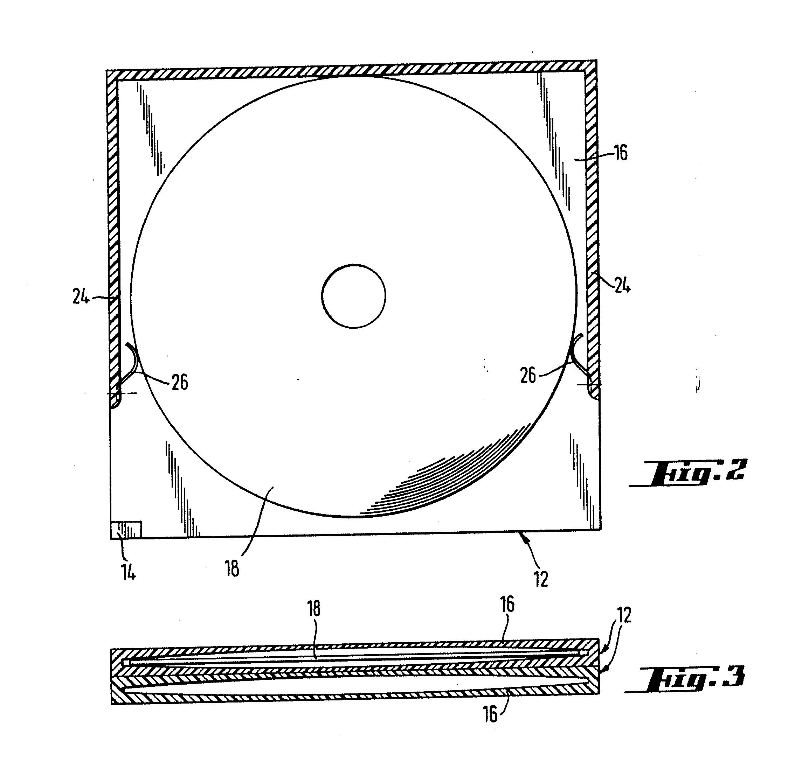

Fig. 2 zeigt den inneren Aufbau eines Halters, also bei entfernter Deckwandung der Platte 16. An der Innenseite der Vertikalwandungen 24 sind zwei Blattfedern 26 so positioniert und vorgespannt, daß sie beim Einschieben der Disc 18 zunächst ausgelenkt werden, dann aber wieder zurückfedern können und dabei eine einwärts gerichtete Kraft auf die Disc ausüben, die den Einlegevorgang unterstützt. Wenn beim Entriegeln der Halter ausgestoßen wird, verhindern die Federn 26 ein Herauskatapultieren der Disc. Es sei angemerkt, daß dieses Prinzip auch bei den weiter unten erläuterten Ausführungsformen angewandt werden kann, dort aber nicht noch einmal gezeichnet ist.

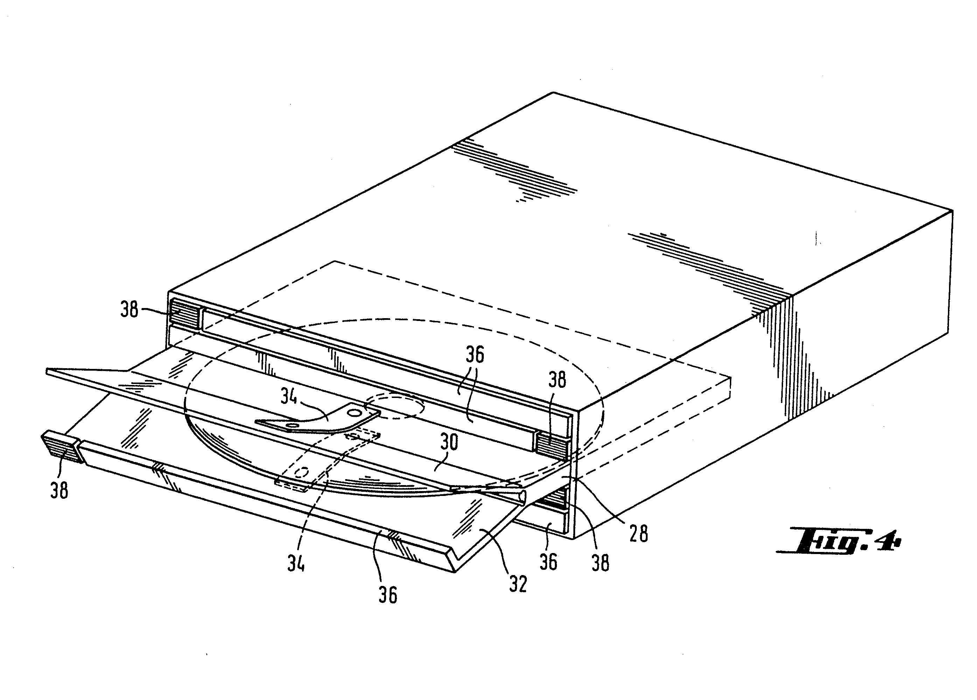

Auch das in Fig. 3 dargestellte Profil der einzelnen Halter ist bei allen Ausführungsformen anwendbar. Die Boden- und Deckwand der die Disc aufnehmenden Platte sind konkav gewölbt, so daß die Disc immer nur mit ihrer Kante, niemals aber mit ihrem Aufzeichnungsbreich Kontakt mit dem Halter haben kann, auch nicht beim Einlegen oder Entnehmen.

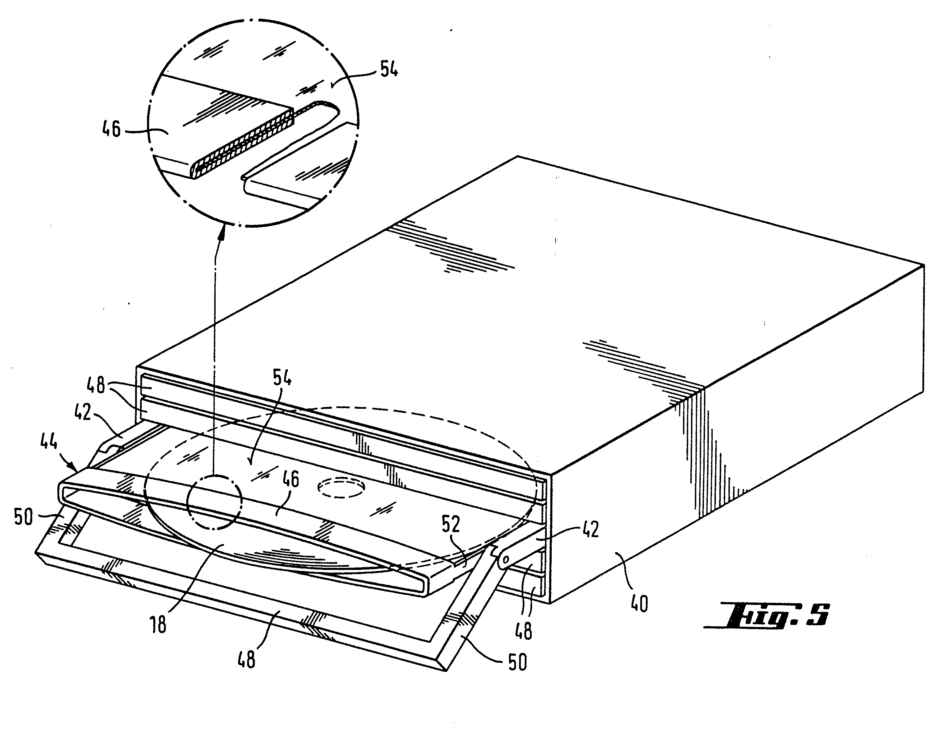

Bei der Variante nach Fig. 4 sind an die Deckwand wie auch an die Bodenwand der den Halter bildenden Platte 28 je eine Klappe 30 bzw. 32 angelenkt, jeweils durch Vorspannfedern 34 aufgespreizt gehalten, wenn der Halter in der Entnahmeposition ist. Die Verschlußleiste 36 bildet hier eine Verlängerung der Entriegelungstaste 38.

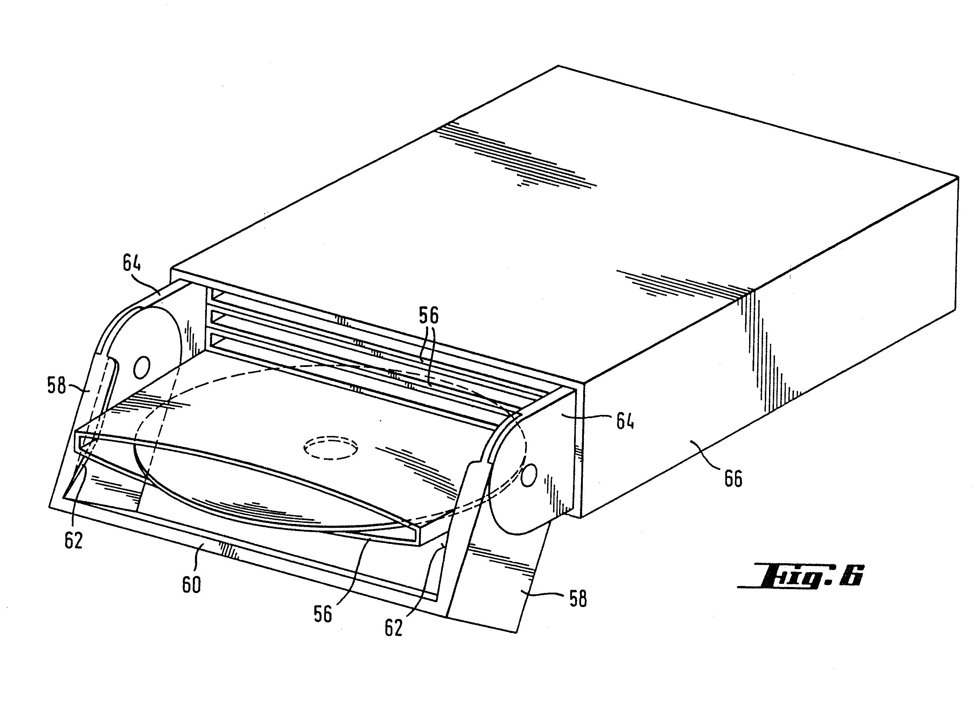

Bei der Ausführungsform nach Fig. 5 sind im Gehäuse 40 Bügel 42 gleitbeweglich geführt, mittels Federanordnung in Entnahmeposition vorgespannt und mittels manuell auslösbarer Verriegelung im Gehäuse gehalten. Jeder Bügel trägt einen Rahmen 44 mit einer frontseitigen Brücke 46, die in der Entnahmeposition oval auffedert, wie für den dritten Halter gezeichnet. Der Verschlußsteg 48 ist mit Wangen 50 an den Bügel 42 angelenkt und abklappbar, wie dargestellt, so daß die Disc 18 in Fluchtlinie mit der aufgespreizten Brücke 46 entnehmbar und einlegbar ist. Der gesamte Rahmen kann aus elastischem Kunststoff bestehen, oder aber die Brücke 46 und mit ihr verbundene seitliche Laschen 52 sind aus Metallblech, und eine Tasche 54 aus Kunststoffolie ist in die Brücke geklemmt, wie dargestellt.

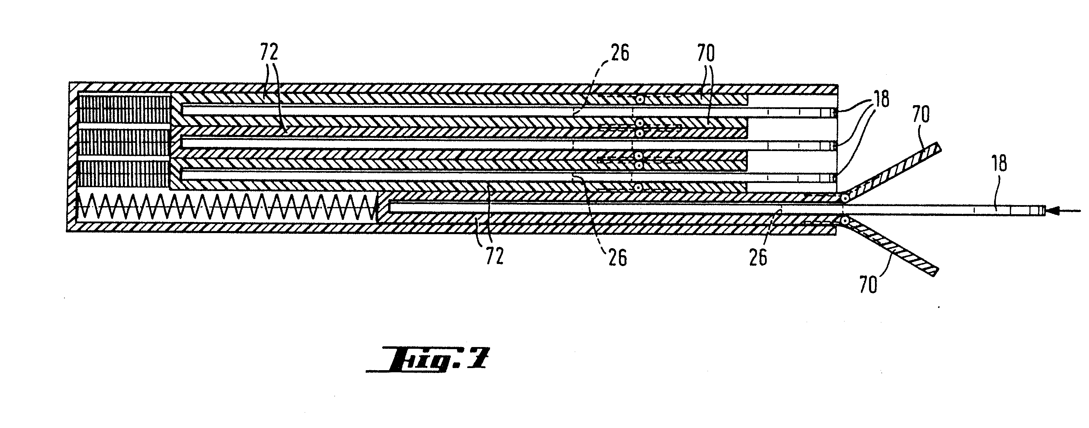

Bei der Variante nach Fig. 6 besteht der Rahmen 56 aus elastischem Kunststoff, der jedoch nicht, wie in Fig. 5, in Öffnungsposition des Disceinlegeschlitzes vorgespannt ist, sondern in die Schließposition. Während demgemäß bei Fig. 5 die Brücke durch das Einschieben des Halters mittels des Verschlußsteges 48 geschlossen wird, erfolgt bei Fig. 6 ein Aufspreizen des Schlitzes durch seitlichen Druck auf den Rahmen 56. Hierfür weisen die Anlenkwangen 58 des Verschlußsteges 60 keilförmige Verdickungen 62 auf, die beim Abklappen des Steges 60 den Raum zwischen den Wangen verengt. Da hierbei ein erheblicher Gegendruck nach außen wirkt, ist für alle Halter nur ein gemeinsamer Bügel 64 mit Steg 60 vorgesehen; ein Wählsystem (nicht dargestellt) sorgt dafür, daß immer nur einer der z.B. fünf Halter aus dem Gehäuse 66 ausgeschoben wird.

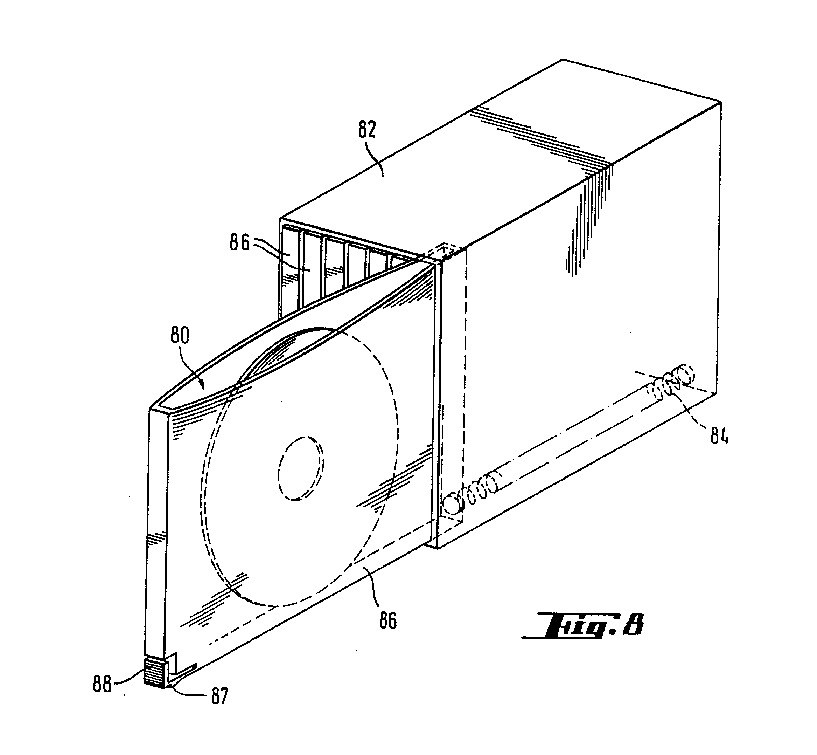

Die Ausführungsform nach Fig. 7 entspricht im Prinzip der nach Fig. 4, jedoch mit dem Unterschied, daß die Tiefe des Halters plus die Tiefe der Klappen 70 kleiner ist als der Durchmesser der Disc. Das frontseitige Segment der Disc 18 bleibt also frei, und der Benutzer schiebt den Halter 72 durch Fingerdruck auf die freie Kante der Disc ein. Wegen der Federn 26 kann die Disc trotz Fehlens von Verschlußstegen nicht herausfallen.

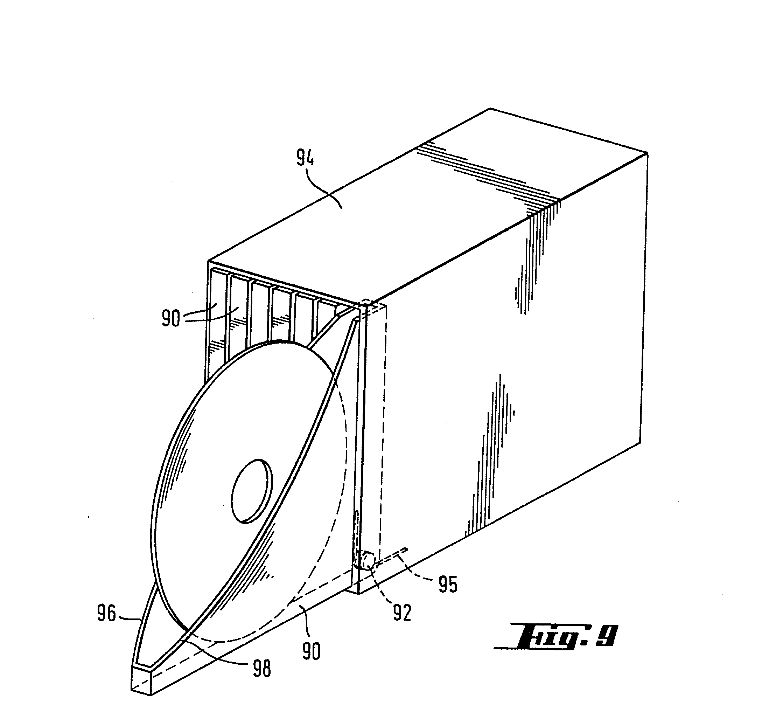

In der Ausführungsform nach Fig. 8 entspricht das Prinzip, gemäß dem der Disceinlegeschlitz geöffnet und geschlossen wird, dem der Fig. 5. Der Schlitz 80 befindet sich aber nicht an der Frontseite des Gehäuses 82, sondern erstreckt sich senkrecht dazu, so daß der Behälter besonders geeignet ist für die "stehende" Aufbewahrung der Discs, wie dargestellt. In der Zeichnung ist die Ausschubfeder 84 angedeutet, ebenso ein an den Halter 86 angeformter Riegel 87, der mittels Taste 88 manuell entriegelbar ist.

Ähnlich ist Fig. 9, bei der jeder Halter 90 eine etwa dreieckförmige Kontur aufweist. Jeder Halter ist um einen Zapfen 92 nahe der Front des Gehäuses 94 schwenkbar und von einer Feder 95 in die Entnahmeposition vorgespannt, in der sich der von den Kanten 96, 98 begrenzte Schlitz federnd öffnet.

0141113

49/96-A1/E

P a t e n t a n s p r ü c h e

1) Behälter für flache Aufzeichnungsträger, wie Schall- oder Bildplatten, mit einem Gehäuse, in dem Halter für je einen Aufzeichnungsträger zwischen einer Aufbewahrungsposition und einer äußeren Entnahmeposition beweglich sind, dadurch gekennzeichnet, daß jeder Halter einen Einschiebeschlitz aufweist, der in der Entnahmeposition trichterartig geöffnet, in der Aufbewahrungsposition jedoch geschlossen ist.

2) Behälter nach Anspruch 1, dadurch gekennzeichnet, daß den Einschiebeschlitz begrenzende Wandungen in die Öffnungslage elastisch vorgespannt sind und durch das Einschieben des Halters in das Gehäuse schließbar sind.

3) Behälter nach Anspruch 1, dadurch gekennzeichnet, daß den Einschiebeschlitz begrenzende Wandungen in die Schließlage elastisch vorgespannt sind und durch das Ausschieben des Halters aus dem Gehäuse aufspreizbar sind.

4) Behälter nach Anspruch 1, dadurch gekennzeichnet, daß den Einschiebeschlitz begrenzende Wandungen in die Schließlage elastisch vorgespannt sind und in der Entnahmeposition aufspreizbar sind.

5) Behälter nach Anspruch 4, dadurch gekennzeichnet, daß ein manuell betätigbarer Aufspreizhebel vorgesehen ist.

6) Behälter nach Anspruch 1, dadurch gekennzeichnet, daß eine Ausschubfederanordnung für die Halter vorgesehen ist, die die Halter in die Entnahmeposition vorspannt, und daß eine Verriegelungsanordnung zum Sichern der Halter in der Aufbewahrungsposition gegen die Federvorspannung vorgesehen ist, die manuell entriegelbar ist.

7) Behälter nach Anspruch 1, dadurch gekennzeichnet, daß jeder Halter gleitbeweglich im Gehäuse gelagert ist.

8) Behälter nach Anspruch 1, dadurch gekennzeichnet, daß jeder Halter eine doppelwandige Platte umfaßt, zwischen deren Wänden ein Aufnahmefach ausgebildet ist.

9) Behälter nach Anspruch 8, dadurch gekennzeichnet, daß an die Platte eine aufspreizbare, den Einführungsschlitz begrenzende Klappe angelenkt ist.

10) Behälter nach Anspruch 9, gekennzeichnet durch Klappen an beiden Plattenwänden, die voneinander abspreizbar sind.

11) Behälter nach Anspruch 8, dadurch gekennzeichnet, daß die Klappe eine abgewinkelte Leiste trägt, die in der Aufbewahrungsposition des Halters das Aufnahmefach nach außen abdeckt.

12) Behälter nach Anspruch 9, dadurch gekennzeichnet, daß der Halter einschließlich seiner Klappe in Bewegungsrichtung kürzer ist als das Gehäuse, dessen entsprechende Abmessung auf die Abmessung des Aufbewahrungsgutes abgestimmt ist.

13) Behälter nach Anspruch 1, dadurch gekennzeichnet, daß jeder Halter einen Beutel umfaßt, dessen Mündung von einer aufspreizbaren, den Einschiebeschlitz begrenzenden Brücke eingefaßt ist.

0141113

14) Behälter nach Anspruch 8, dadurch gekennzeichnet, daß die dem Aufnahmefach zugekehrten Innenseiten der Platte konkav ausgebildet sind.

15) Behälter nach Anspruch 8 für kreisrunde Aufzeichnungsträger, dadurch gekennzeichnet, daß in dem Aufnahmefach sich an die Aufzeichnungsträgerkante anlegende Blattfedern vorgesehen sind, die beim Einschieben des Aufzeichnungsträgers elastisch deformiert werden und in der Aufbewahrungslage des Aufzeichnungsträgers mindestens teilweise wieder entspannt sind.

16) Behälter nach Anspruch 1, gekennzeichnet durch eine abklappbare Frontwand für die Gehäuseöffnung, durch die die Halter beweglich sind.

17) Behälter nach Anspruch 5 und Anspruch 16, dadurch gekennzeichnet, daß der Aufspreizhebel einen Teil der abklappbaren Frontwand bildet.

18) Behälter nach Anspruch 16, dadurch gekennzeichnet, daß jedem Halter eine eigene abklappbare Frontwand zugeordnet ist.

19) Behälter nach Anspruch 6, dadurch gekennzeichnet, daß jeder Halter eine Auslösetaste aufweist, und daß die Auslösetasten benachbarter Halter gegeneinander versetzt auf deren Front angeordnet sind.

Fig.1

Fig. 2

Fig. 3

Fig. 4

0141113

Fig. 5

Fig. 6

Fig. 7

Fig.8

*Fig. 9*

0141113

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-1 850 790 (L.L. CUNNINGHAM) * Seite 1, Zeile 81 - Seite 2, Zeile 36; Figuren 1-3 * | 1-3,7 | G 11 B 23/03 |
| A | | 8 | |
| X | FR-A- 685 404 (S.V. ELESZKIEWICZ) * Seite 1, Zeile 57 - Seite 2, Zeile 33; Seite 2, Zeilen 69-82; Figuren 1-3 * | 1-3,7 | |
| A | FR-A- 976 158 (J. CHENOUARD) * Seite 2, Spalte 1, Zeile 51 - Spalte 2, Zeile 18; Figuren 3,11 * | 1,4 | |
| A | CH-A- 282 442 (J. CHENOUARD) * Figur 8 * | | RECHERCHIERTE SACHGEBIETE (Int. Cl.4) G 11 B 23/00 B 65 D 85/00 |

Der vorliegende Recherchenbericht wurde für alle Patentansprüche erstellt.

| Recherchenort BERLIN | Abschlußdatum der Recherche 25-10-1984 | Prüfer ROGNONI M.G.L. |
|---|---|---|